# EUROPEAN PATENT APPLICATION

(11) **EP 1 699 235 A1**
(43) Date of publication of application: **06.09.2006**
(21) Application number: 04807464.5
(22) Date of filing: 21.12.2004
(51) Int. Cl.: H04N 5/445, H04N 7/173, H04H 1/00

(54) **BROADCAST RECEPTION TERMINAL AND BROADCAST DEVICE**

(30) Priority: 24.12.2003 JP 2003426799
(71) Applicant: Matsushita Electric Industries Co., Ltd., Kadoma-shi, Osaka 571-8501 (JP)
(72) Inventor: YAMAGUCHI, Kohei, Nara 631-0842 (JP); FUJITA, Takahisa, Osaka 563-0036 (JP); URA, Seiji, Osaka 567-0841 (JP); SAGA, Masaki, Osaka 565-0821 (JP)
(74) Representative: Pautex Schneider, Nicole Véronique
(86) International application number: PCT/JP2004/019107
(87) International publication number: WO 2005/071952

(57) **Abstract**

The present invention provides a broadcast receiving terminal which improves power conservation, in which a user does not miss broadcast contents s/he likes.

The broadcast receiving terminal (100) includes: a display unit (120) for displaying TV program content; a state administration unit (112) which judges whether or not to display the TV program content, based on the user's operation; and a first processing unit (110), which receives a digital broadcast wave and operates as follows: executes decoding on stream information, and causes the TV program content to be displayed in the display unit (120) when the TV program content are judged to be displayed. The first processing unit (110) presents an outline indicating real-time TV program information so that the outline is synchronized with the TV program content when the TV program content are judged not to be displayed.

## Description

### Technical Field

The present invention relates to a broadcast receiving terminal which receives a broadcast wave and displays an image and the like, and a broadcast apparatus which transmits that broadcast wave.

### Background Art

Following the trend towards digitalization in recent years, digital broadcast is being applied in ground wave broadcast, in addition to Broadcasting Satellite (BS) broadcast and Communication Satellite (CS) broadcast. A major difference between the ground wave digital broadcast and the BS broadcast or the CS broadcast is that the ground wave digital broadcast employs the Orthogonal Frequency Division Multiplexing (OFDM) system, which can apply differing modulation systems in the same frequency. By employing the OFDM system in the ground wave digital broadcast, differing modulation systems can be used; namely, a modulation system with a high data transmission rate, but where radio waves in a stable state are required, and a modulation system with a low data transmission rate, but where stable reception is possible even with radio waves in a comparatively unstable state. Because of this, with ground wave digital broadcast, it is assumed that broadcast aimed at a stationary broadcast receiving terminal using the former modulation system, and broadcast aimed at a portable broadcast receiving terminal using the latter modulation system, can be achieved simultaneously.

Here, for a user to view a digital broadcast, the broadcast receiving terminal must constantly supply power to a video decoder that executes decoding of image data received as digital broadcast waves, a display that displays an image, and the like. In other words, a significant amount of power is consumed in viewing a digital broadcast, so implementing power conservation is important, particularly in a portable broadcast receiving terminal which operates on a limited battery.

Accordingly, a broadcast apparatus which multiplexes a control program into a digital broadcast wave and sends the multiplexed digital broadcast wave, and a broadcast receiving terminal which receives the digital broadcast wave and stops the power supply to the video decoder, display, and the like in accordance with the control program multiplexed into the digital broadcast wave, are proposed as a conventional technology (e.g., see Patent Reference 1).
Patent Reference 1: Japanese Laid-Open Patent Application No. 2003-78840

### Disclosure of Invention

### Problems that Invention is to Solve

However, the problem with the broadcast receiving terminal and broadcast apparatus in Patent Reference 1 is that sufficient power conservation is not possible.

That is to say, the broadcast receiving terminal in Patent Reference 1 executes control of the power supply in accordance only with the control program transmitted by the digital broadcast wave. The result is that, regardless that a user wishes to watch only one scene of a TV program of a digital broadcast, s/he will miss that one scene unless s/he watches the entire TV program projected on the display in accordance with the control program. Because of this, the broadcast receiving terminal must execute image processing, such as decoding for projecting the TV program, etc, over a long period of time, and sufficient power conservation is not possible. To put it differently, with the broadcast receiving terminal in Patent Reference 1, a user viewing a digital broadcast cannot choose to put the broadcast receiving terminal into a power-conserving state, and the timing of the control of the power supply is hardly the most appropriate timing for the user.

In addition, in broadcast receiving terminals functional to receive digital broadcast waves, such as cellular phones, Personal Digital Assistants (PDAs), etc, the diversification and sophistication of functions are progressing. Not only a basic calling function, but also an e-mail function, an application program such as represented by JAVA™, a camera function, etc, are standard in cellular phones. It is highly possible that a user does not possess and carry this kind of multi-function broadcast receiving terminal, such as a cellular phone, for the sole purpose of viewing a digital broadcast, but, most of the time, uses other functions aside from the function to receive digital broadcast waves. Therefore, in the period when the user is using another function, such as e-mail, etc, s/he may miss a TV program, or a scene of a TV program in progress, that s/he wanted to watch.

Accordingly, the present invention takes into account the aforementioned problem, and aims to provide a broadcast receiving terminal that achieves improved power conservation and in which the user does not miss broadcast contents s/he likes, and a broadcast apparatus.

### Means to Solve the Problems

To fulfill the aforementioned object, a broadcast receiving terminal in the present invention is a broadcast receiving terminal which receives a broadcast wave and displays broadcast contents, wherein the broadcast wave includes stream information indicating broadcast contents, and outline information indicating an outline of the broadcast contents, and the broadcast receiving terminal includes: a receiving unit operable to receive the broadcast wave; a display unit operable to display the broadcast contents; a judging unit operable to judge, based on a user's operation, whether or not the broadcast contents should be displayed; a display control unit operable to perform image processing on the stream information of the broadcast wave received by the receiving unit, and to cause the display unit to display the broadcast contents, when the judging unit judges that the broadcast contents should be displayed; and an outline presentation unit operable to present the outline, so that the outline synchronizes with the broadcast contents, which is indicated in the outline details transmitted by the broadcast wave received by said receiving unit, when said judging unit judges that the broadcast contents should not be displayed.

For example, extensive power is consumed in executing an image processing, such as decoding a stream that indicates broadcast contents of a TV program, etc.

Therefore, with the broadcast receiving terminal in the present invention, a display of a TV program and a display of an outline of that TV program can be switched between based on the user's operation, so that, for example, in a time when a scene of no interest to the user is being broadcast, if the user operates the broadcast receiving terminal so that only an outline is displayed, the image processing is not executed by the display control unit, and power conservation can be achieved. Additionally, even when the TV program is not being displayed, an outline synchronized with the TV program is being displayed, so the user can know whether or not a scene of interest to him/her is being broadcast by watching that outline. If the user then operates the broadcast receiving terminal, the scene of interest can be displayed in the display unit, preventing him/her from missing that scene of interest. That is to say, improved power conservation can be achieved, and the user does not miss broadcast contents s/he likes.

Here, the broadcast receiving terminal may further include a function processing unit which activates and terminates a predetermined function based on a user's operation, and judges that the broadcast contents should not be displayed, when the predetermined function is activated, and judges that the broadcast contents should be displayed, when the predetermined function is terminated.

For example, when an e-mail function is activated as a predetermined function, an outline is displayed without the broadcast contents of a TV program, etc, being displayed, and the TV program is displayed when the e-mail function is terminated. Therefore, the user can use the e-mail function without missing a scene of interest in the TV program, and power conservation can be achieved while improving the usability for the user.

In addition, the outline presentation unit may also notify the user of the outline indicated by the outline information through a voice.

Through this, by notifying the outline of the broadcast contents of a TV program, etc, through a voice, the user does not need to continually pay attention to the broadcast receiving unit, as compared to the case where the outline is displayed as a character string; and the usability is further improved for the user.

In addition, the outline information may include time information indicating the time when the outline should be presented, where the outline presentation unit presents the outline when the present time matches the time indicated by the time information.

Through this, the outline is presented when the present time matches the time indicated by the time information, and therefore can easily be synchronized with the broadcast contents.

In addition, the outline presentation unit may further perform image processing on the stream information of the broadcast wave received by said receiving unit, and cause said display unit to display a moving picture with a lower image quality than the broadcast contents displayed by said display control unit, when the judging unit judges that the broadcast contents should not be displayed.

Through this, because a moving picture is displayed, the user can easily know what kind of TV program is being broadcast. Additionally, because the image quality of the moving picture displayed here is less than that of the broadcast contents displayed through the display control unit, the power needed by the image processing executed to obtain that moving picture is less than the power needed by the image processing executed by the display control unit, so power conservation can be achieved.

In addition, the broadcast receiving terminal may be configured in first and second forms, which can be altered freely in accordance with a user's operation, where the judging unit judges that the broadcast contents should be displayed, when the broadcast receiving terminal is in the first form, and judges that the broadcast contents should not be displayed, when the broadcast receiving terminal is in the second form. For example, the display unit includes a first display unit, which appears on the surface when the broadcast receiving terminal is in the first form, and a second display unit, which appears on the surface when the broadcast receiving terminal is in the second form; and the display control unit causes the first display unit to display the broadcast contents, and the outline presentation unit causes the second display unit to display the outline.

Through this, when the broadcast receiving terminal is, for example, in the opened first form, the broadcast contents of the TV program are displayed, and when the broadcast receiving terminal is, for example, in the closed second form, the outline of the TV program is synchronized with that TV program and displayed; therefore, the user can freely switch between the display of the TV program and the display of the outline by changing the form of the broadcast receiving terminal.

Here, a broadcast apparatus according to the present invention is a broadcast apparatus which transmits a broadcast wave, and includes an outline information generating unit which generates an outline information indicating an outline of broadcast contents of the broadcast wave, and a transmission unit which transmits the outline information on the broadcast wave so that the outline indicated by the outline information is synchronized with the broadcast contents.

Through this, because the outline information is transmitted included in the broadcast wave so that the outline information is synchronized with the broadcast contents, the broadcast receiving terminal that receives this broadcast wave can, for example, switch between the display of that broadcast contents and the display of the outline synchronized to that broadcast contents in response to the operation of the user, and the broadcast receiving terminal can reflect the inclination of the user, and improved power conservation can be achieved.

Note that the present invention can be realized not only as this kind of broadcast receiving terminal and broadcast apparatus, but also as a storage medium stored with an operation method and a program executed by the broadcast receiving terminal and broadcast apparatus.

### Effects of the Invention

The broadcast receiving terminal and broadcast device of the present invention have the effect of improving power conservation, without the user missing broadcast contents s/he likes.

### Brief Description of Drawings

[FIG. 1] FIG. 1 is a configuration diagram showing a configuration of a broadcast system in the embodiment of the present invention.
[FIG. 2] FIG. 2 is a block diagram showing a configuration of a broadcast apparatus in the above embodiment.
[FIG. 3] FIG. 3 is a diagram showing a data configuration of one part of a digital broadcast wave in the above embodiment.
[FIG. 4] FIG. 4 is a block diagram showing a configuration of a broadcast receiving terminal in the above embodiment.
[FIG. 5] FIG. 5 is a diagram that shows one example of a screen display of a display unit in the above embodiment.
[FIG. 6] FIG. 6 is a flowchart showing the flow of a process of the broadcast receiving terminal in the above embodiment.
[FIG. 7] FIG. 7 is a state-transition diagram of a broadcast receiving function of the broadcast receiving terminal in the above embodiment.
[FIG. 8] FIG. 8 is a block diagram showing a configuration of a broadcast receiving terminal in a first variation of the above embodiment.
[FIG. 9] FIG. 9 is a diagram showing one example of a display screen of a display unit and a sub-display unit of the broadcast receiving terminal in the first variation of the above embodiment.
[FIG. 10] FIG. 10 is a state-transition diagram of the broadcast receiving function of the broadcast receiving terminal in the first variation of the above embodiment.
[FIG. 11] FIG. 11 is a block diagram showing a configuration of a broadcast receiving terminal in a second variation of the above embodiment.
[FIG. 12] FIG. 12 is a diagram showing one example of an image display of a display unit in the second variation of the above embodiment.
[FIG. 13] FIG. 13 is a state-transition diagram of a broadcast receiving function of the broadcast receiving terminal in the second variation of the above embodiment.
[FIG. 14] FIG. 14 is a block diagram showing the configuration of a broadcast receiving terminal in a third variation of the above embodiment.
[FIG. 15] FIG. 15 is a flowchart showing an operation occurring in a background state of the broadcast receiving terminal in the third variation of the above embodiment.
[FIG. 16] FIG. 16 is a block diagram showing a configuration of a broadcast receiving terminal in a fourth variation of the above embodiment.
[FIG. 17] FIG. 17 is a descriptive drawing to describe the appearance when a broadcast receiving function of the broadcast receiving terminal in the fourth variation of the above embodiment is in a background state.
[FIG. 18] FIG. 18 is a diagram showing one example of a display image of a display unit when a broadcast receiving function is in a background state in a fifth variation of the above embodiment.
[FIG. 19] FIG. 19 is a block diagram showing a configuration of a broadcast receiving terminal in a sixth variation of the above embodiment.
[FIG. 20] FIG. 20 is a state-transition diagram of a broadcast receiving function of the broadcast receiving terminal in the sixth variation of the above embodiment.

### Numerical References

- 100: a broadcast receiving terminal
- 110: a first processing unit
- 111: a receiving unit
- 112: a state administration unit
- 113: a presentation control unit
- 120: a display unit
- 130: a second processing unit
- 200: a broadcast apparatus
- 201: a stream generating unit
- 202: a data carousel generating unit
- 203: a information generating unit
- 205: a transmitting unit

### Best Mode for Carrying Out the Invention

The embodiment of the present invention is described below with reference to the diagrams.

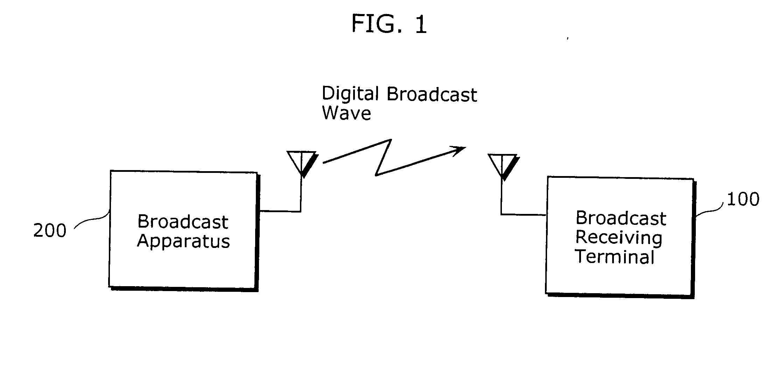

FIG. 1 is a configuration diagram showing a configuration of a broadcast system in the embodiment of the present invention.

The broadcast system in the present embodiment is one in which power conservation is improved and in which the user does not miss broadcast contents s/he likes, and includes a broadcast receiving terminal 100 and a broadcast apparatus 200.

The broadcast apparatus 200 multiplexes real-time TV program information (outline information) indicating an outline of a TV program content into a digital broadcast wave indicating the TV program content (broadcast contents) of a digital broadcast. Then, the broadcast apparatus 200 transmits the digital broadcast wave multiplexed with the real-time TV program information.

The broadcast receiving terminal 100 is, for example, a cellular phone, and has a broadcast receiving function, for receiving the digital broadcast wave transmitted by the broadcast apparatus 200 and projecting the TV program content, as well as additional functions such as an e-mail function, for editing and sending/receiving e-mail, and a calling function, for making telephone calls.

The broadcast receiving terminal 100 offers to the user an outline of the TV program content which is shown by the real-time TV program information and which is synchronized with the TV program content, when an additional function is being activated or executed.

Note that while only one broadcast receiving terminal 100 is shown in FIG. 1, a plurality of broadcast receiving terminals 100 can receive the digital broadcast wave from the broadcast apparatus 200.

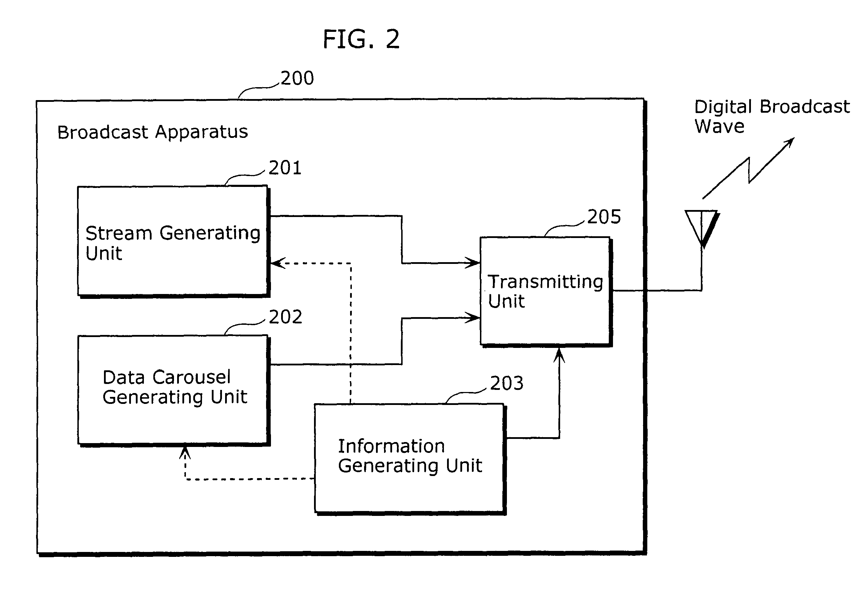

FIG. 2 is a block diagram showing a configuration of the broadcast apparatus 200 in the embodiment of the present invention.
As shown in FIG. 2, the broadcast apparatus 200 includes a stream generating unit 201, a data carousel generating unit 202, an information generating unit 203, and a transmission unit 205.

The stream generation unit 201 generates stream information indicating an image, a sound, etc. of the TV program content of the digital broadcast, and outputs the generated stream information.

The data carousel generating unit 202 generates contents information of a data broadcast TV program in the digital broadcast, and outputs that contents information after encoding it into a data carousel, which is a data broadcast transmission method.

The information generating unit 203 refers to the stream information and the data carousel, generates real-time TV program information synchronized with the image, sound, and data that is the TV program content of the digital broadcast, and outputs the generated real-time TV program information.

The transmission unit 205 acquires the stream information outputted by the stream generating unit 201, the data carousel outputted by the data carousel generating unit 202, and the real-time TV program information outputted by the information generating unit 203, and multiplexes that stream information, data carousel, and real-time TV program information, generating a digital broadcast wave. The transmission unit 205 then modulates and transmits the digital broadcast wave.

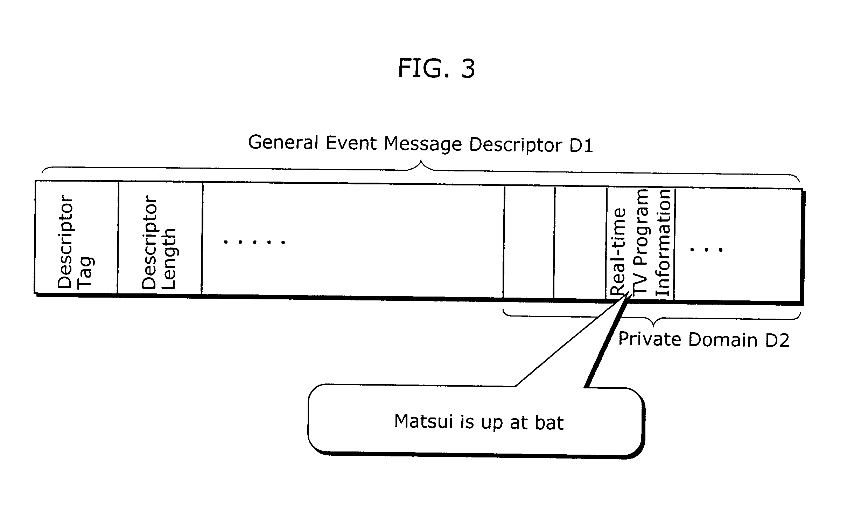

FIG. 3 is a diagram showing a data configuration part of a digital broadcast wave in the embodiment of the present invention.

As shown in FIG. 3, the real-time TV program information is stored in a private domain D2 of a general purpose event message descriptor D1 of the digital broadcast wave. For example, the real-time TV program information is text data showing a character string that says "Matsui is up at bat." Additionally, the private domain D2 has a size of, for example, 8xN bits (N being a natural number).

Note that in the encoding of the real-time TV program information generated by the information generation unit 203, the following cases can be considered: a case where the real-time TV program information is directly encoded into a transport stream (TS) packet in a unique format; and a case where the real-time TV program information is encoded into a TS packet after first being converted into a section format. Furthermore, in the techniques for converting into the section format, there is: a technique in which the real-time TV program information is formatted and transmitted in data carousel method, as a module; and a technique in which it is stored in the private domain D2 of the general purpose event message descriptor D1.

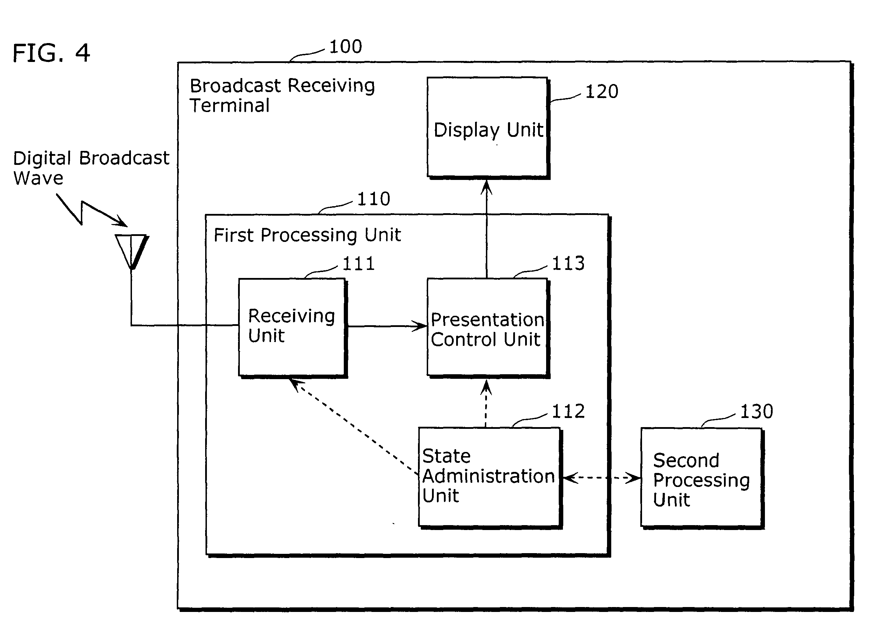

FIG. 4 is a block diagram showing a configuration of a broadcast receiving terminal 100 in the embodiment of the present invention.

The broadcast receiving terminal 100 includes a display unit 120, a first processing unit 110, and a second processing unit 130.

The display unit 120 displays characters, images, etc, and is configured, for example, of a Liquid Crystal Display (LCD), etc.

The second processing unit 130 is configured as a function processing unit, and executes operations based on the aforementioned additional functions, for example, an e-mail function, a calling function, a JAVA™ application function, a web browser function, a Personal Information Manager (PIM) function, a camera function, and a menu launcher function; and causes an image that is based on those functions to be displayed in the display unit 120. Here, the menu launcher function is a function which shows each function of the broadcast receiving terminal, and which causes the function selected by the user to be activated.

The first processing unit 110 has a broadcast receiving function, and receives the digital broadcast wave from the broadcast apparatus 200. The first processing unit 110 then controls the display of the display unit 120 based on stream information extracted from the received digital broadcast wave, the real-time TV program information, and the like.

The first processing unit 110 includes a receiving unit 111, a state administration unit 112, and a presentation control unit 113.

The state administration unit 112 is configured as a judgment unit, which judges whether the broadcast receiving function should be in a normal presentation state or in a background state based upon the operation status of the additional function in the second processing unit 130. It then notifies the receiving unit 111 and the presentation control unit 113 of that state which was judged.

Here, the normal presentation state of the broadcast receiving function refers to a state in which the display unit 120 is used by the receiving function and TV program content are shown in the display unit 120. Additionally, the background state of the broadcast receiving function refers to a state in which the first processing unit is receiving a digital broadcast wave due to activation of the broadcast receiving function, but because the display unit 120 is being used by the additional functions, TV program content are not shown in the display unit 120.

The receiving unit 111 receives a digital broadcast wave based on the user's operation. The broadcast receiving function activates through receiving the digital broadcast wave.

Here, when the receiving unit 111 receives a notification from the state administration unit 112 indicating that the broadcast receiving function should be in the normal state, the receiving unit 111 extracts a stream information and a data carousel from the digital broadcast wave received, and executes processing such as decoding, rendering, etc, on the stream information and the data carousel respectively. Then, the receiving unit 111 outputs the processed stream information and data carousel to the presentation control unit 113. Additionally, when the receiving unit 111 receives a notification from the state administration unit 112 indicating that the broadcast receiving function should be in the background state, only the real-time TV program information is extracted from the digital broadcast wave received, and is outputted to the presentation control unit 113.

The presentation control unit 113 controls the display format of the display unit 120 based on the notification from the state administration unit 112. In other words, when the presentation control unit 113 receives a notification indicating the broadcast receiving function should be in the background state, the presentation control unit 113 causes the details of the real-time TV program information extracted by the receiving unit 111 to be displayed in the display unit 120. In this case, the presentation control unit 113 causes those details to be displayed in a pict area of a display screen of the display unit 120. However, when the presentation control unit 113 receives a notification indicating the broadcast receiving function should be in the normal presentation state, the presentation control unit 113 causes the details of the stream information, the data carousel, and the like to be displayed in the part excluding the pict area of the display unit 120.

A display control unit and an outline presentation unit are thus configured from the receiving unit 111 and the presentation control unit 113.

Note that the pict area is one area always allotted to the display screen of the display unit 120 for the purpose of showing the state of the broadcast receiving terminal 100 using graphics, etc, regardless of the operation of the broadcast receiving terminal 100.

The overall operations of the first processing unit 110 are explained.
For example, the second processing unit 130 activates an additional function, such as the e-mail function, and causes a screen based on that e-mail function to be predominantly displayed in the display unit 120. Furthermore, the second processing unit 130 notifies the state administration unit 112 that the additional function has been activated, or to put it differently, that the display unit 120 is used by the e-mail function.

The state administration unit 112, having received the notification from the second processing unit 130, judges that the state of the broadcast receiving function must be put into the background state, when the broadcast receiving function is in the normal presentation state. Then, the state administration unit 112 notifies the receiving unit 111 and the presentation control unit 113 that the broadcast receiving function should be put into the background state.

The receiving unit 111, having received the notification from the state administration unit 112, stops extracting the stream information from the digital broadcast wave, or stops decoding the stream information. Furthermore, the receiving unit 111 stops extracting the data carousel from the digital broadcast wave, or stops reconstitution of the module from the data carousel. Additionally, the receiving unit 111 extracts the real-time TV program information from the digital broadcast wave, and outputs the extracted real-time TV program information to the presentation control unit 113.

When the presentation control unit 113 receives the notification of the background state from the state administration unit 112, the presentation control unit causes the real-time TV program information outputted from the receiving unit 111 to be presented in the pict area of the display unit 120.

Here, for example, when the second processing unit 130 terminates the e-mail function, the second processing unit 130 notifies the state administration unit 112 of that termination.

The state administration unit 112, having received the notification from the second processing unit 130, judges that the state of the broadcast receiving function must be put into the normal presentation state. Then, the state administration unit 112 notifies the receiving unit 111 and the presentation control unit 113 that the broadcast receiving function should be put into normal presentation state.

The receiving unit 111, having received the notification from the state administration unit 112, extracts the stream information from the digital broadcast wave, and decodes that stream information. Furthermore, the receiving unit 111 extracts the data carousel from the digital broadcast wave, and reconstitutes a module from that data carousel. Additionally, the receiving unit 111 stops extracting the real-time TV program information from the digital broadcast wave.

When the presentation control unit 113 receives the notification of the normal presentation state from the state administration unit 112, the presentation control unit 113 causes the details of the stream information decoded by the receiving unit 111, and the reconstituted module, to be displayed in the display screen of the display unit 120.

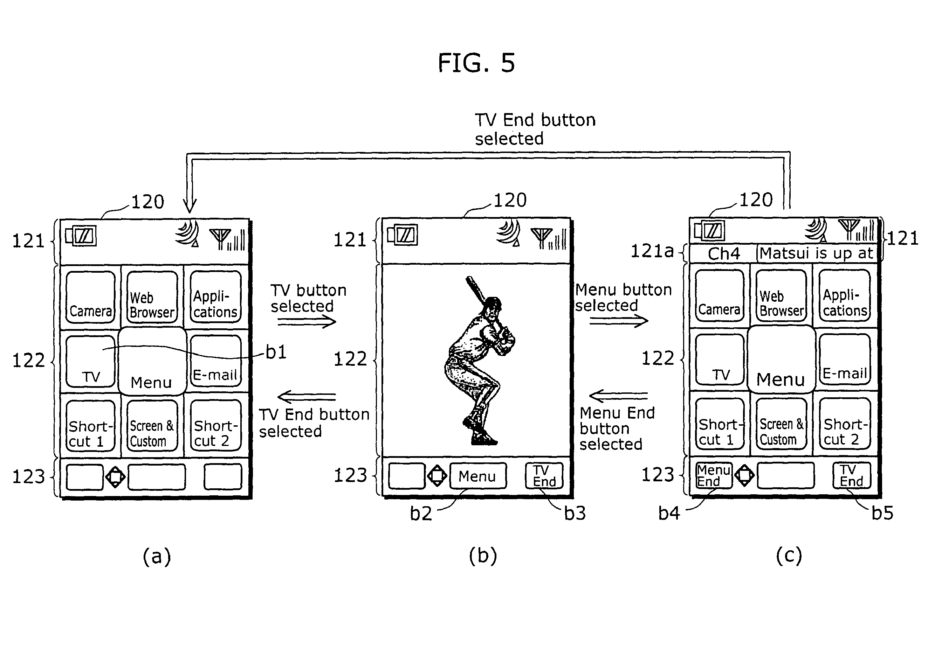

FIG. 5 is a diagram showing one example of a screen display of the display unit 120.
The screen display of the display unit 120 has three areas: a main area 122, normally used by the broadcast receiving function and additional functions which the broadcast receiving terminal 100 features; a pict area 121, mentioned above, which continually shows the state of the broadcast receiving terminal 100, regardless of the currently active functions; and a guidance area 123, which displays a simple description of the operations of the broadcast receiving terminal 100.

Note that the display unit 120 is described here as having three areas, but it may also have four or more areas, or two or less areas. For example, in the case where a specified function is currently active, the display unit 120 does not display the pict area, making the number of areas two.

As is shown in (a) of FIG. 5, the second processing unit 130 causes a menu to be displayed in the main area 122 of the display unit 120 when the second processing unit 130 activates the menu launcher function while the broadcast receiving function is not in an active state (in other words, the first processing unit 110 is in a state of not receiving the digital broadcast wave).

For example, in a state where this kind of display is being executed, the user operates the broadcast receiving terminal 100, and selects a TV button b1 that displays "TV."

When the TV button b1 is selected, the broadcast receiving function is activated and becomes the normal presentation state, and the display unit 120 displays the screen as shown in (b) of FIG. 5.

In other words, the second processing unit 130 causes the menu launcher function to terminate in response to the selection of the TV button b1, and notifies the first processing unit 110 of that termination and selection of the TV button b1. The result is that the first processing unit 110, through the activation of the broadcast receiving function, receives the digital broadcast wave, and causes the TV program content of the digital broadcast to be shown in the main area 122 of the display unit 120.

At this time, the display unit 120 displays, in the guidance area 123, a Menu button b2 for returning to a menu screen, and a TV End button b3 terminating the display of the TV program content and the reception of the digital broadcast wave.

When the TV End button b3 is selected through the user's operation, the first processing unit 110 terminates the broadcast receiving function, or to put it differently, terminates the processes such as reception of the digital broadcast wave and extraction of the stream information. Through this, the display unit 120 displays a pre-set standby screen, etc, in the main area 122.

When the Menu button b2 is selected through the user's operation, the broadcast receiving function goes into the background state, and the display unit 120 displays the screen shown in (c) of FIG. 5.

In other words, the second processing unit 130 activates the menu launcher function and notifies that activation to the first processing unit 110. Then, through the activation of the menu launcher function, the second processing unit 130 causes the menu to be displayed in the main display area 122 of the display unit 120.

The first processing unit 110, having received notification of the activation of the menu launcher function, stops the processes such as extracting the stream information from the digital broadcast wave, etc, but also extracts the real-time TV program information from the digital broadcast wave, and causes the details (the outline) of that real-time TV program information to be displayed as a character string in an information presentation area 121a, which is a part of the pict area 121 in the display unit 120. The first processing unit 110 causes the character string that is the outline to be scrolled in, for example, a horizontal or vertical direction.

Also at this time, the display unit 120 shows, in the guidance area 123, a Menu End button b4 for terminating the display of the menu, and a TV End button b5 for terminating the display of the outline and the reception of the digital broadcast wave.

When the Menu End button b4 is selected through the user's operation, the broadcast receiving function goes into the normal presentation state, and the display unit 120 displays the screen shown in (b) of FIG. 5.

In other words, the first processing unit 110 initializes the processes such as extracting the stream information from the digital broadcast wave, but also stops the processes such as extraction of the real-time TV program information from the digital broadcast wave. The result is that the first processing unit 110 causes the TV program content of the digital broadcast to be displayed in the main area 122 of the display unit 120.

In addition, when the TV End button b5 is selected through the user's operation, the first processing unit 110 terminates the broadcast receiving function. The result is that, as shown in (a) of FIG. 5, the outline that was displayed in the information presentation area 121a of the display unit 120 ceases to be displayed.

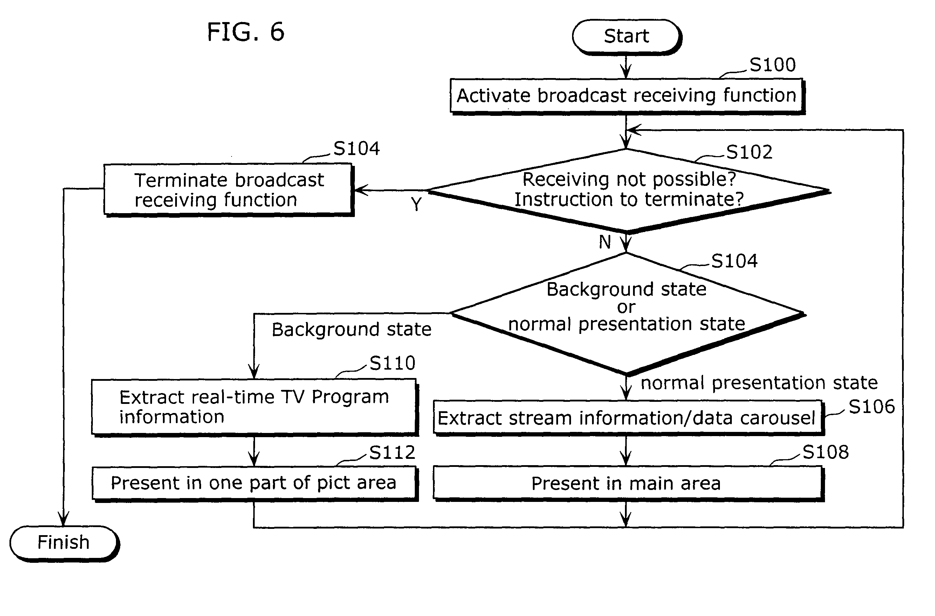

FIG. 6 is a flowchart showing the flow of the process in the broadcast receiving terminal 100 in the embodiment of the present invention.

First, the broadcast receiving terminal 100 activates the broadcast receiving function through the selection of the TV button b1 (step S100).

The broadcast receiving terminal 100 judges whether or not receiving the digital broadcast wave is impossible, and whether or not termination of the broadcast receiving function was instructed through the selection of the TV End button b5 (step S102).

Here, when receiving is judged as impossible, or termination is judged being instructed (Y of step S102), the broadcast receiving terminal 100 terminates the broadcast receiving function (step S104). Note that notification of an error is also acceptable when receiving the digital broadcast wave is impossible.

On the other hand, when receiving is judged possible, or termination is judged as not being instructed (N of step S102), the broadcast receiving terminal 100 judges whether the broadcast receiving function should be in the background state or the normal presentation state (step S104), based on the operation status of the additional functions.
Here, when the normal presentation state is judged, the broadcast receiving terminal 100 extracts the stream information and the data carousel from the digital broadcast wave, and executes decoding processing, rendering processing, and the like on them (step S106). Then, the broadcast receiving terminal 100 projects the TV program content of the digital broadcast indicated by the data carousel and the stream information that underwent the aforementioned processing on the main area 122 of the display unit 120 (step S108).

On the other hand, when the background state is judged, the broadcast receiving terminal 100 extracts the real-time TV program information from the digital broadcast wave (step S110). Then, the broadcast receiving terminal 100 displays the outline of the TV program content indicated by the extracted real-time TV program information as a character string in the pict area 121 (the information presentation area 121a) of the display unit 120 (step S112).

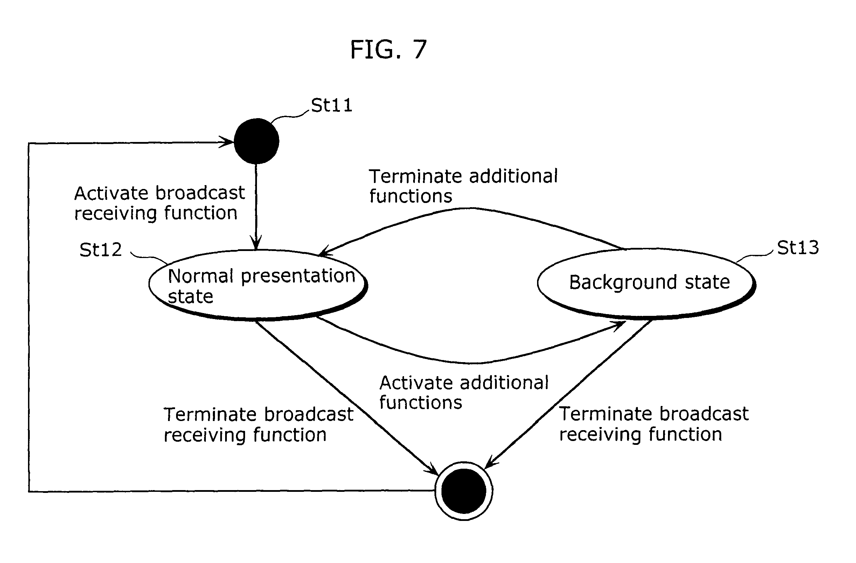

FIG. 7 is a state-transition diagram of a broadcast receiving function of a broadcast receiving terminal 100 in the embodiment of the present invention.

In the states of the broadcast receiving function of the broadcast receiving terminal 100, there is a stop state St11 when the operation based on that function is not being executed, as well as the aforementioned normal presentation state St12 and the background state St13.

For example, when the broadcast receiving function is activated through selection of the TV button b1, the state is transited from the stop state St11 to the normal presentation state St12.

For example, when the menu launcher function is activated through the selection of the Menu button b2, the normal presentation state St12 is transited to the background state St13. Additionally, for example, when the broadcast receiving function is terminated through the selection of the TV End button b3, the normal presentation state St12 returns to the stop state St11.

For example, when the menu launcher function is terminated through the selection of the Menu End button b4, the background state St13 is transited to the normal presentation state St12. Additionally, for example, when the broadcast receiving function is terminated through the selection of the TV End button b3, the background state St13 returns to the stop state St11.

Note that in the above examples, the state of the broadcast receiving function transited based on the activation and termination of the menu launcher function, but transition based on the activation or termination of other additional functions is also acceptable.

In this manner, in the embodiment of the present invention, the display of TV program content and the display of the outline of that TV program content can be switched between through the activation or termination of the additional functions, based on the user's operation. Therefore, for example, in a time when a scene of no interest to the user is being broadcast, when the user operates the broadcast receiving terminal and activates the additional functions, such as an e-mail function, and only an outline is displayed, then the decoding, etc, of the stream information is not executed, and power conservation and be achieved. Additionally, even when the TV program content is not being displayed, an outline synchronized with that TV program content is being displayed, so the user can know whether or not a scene of interest to him/her is being broadcast by looking at that outline. Then, when the user operates the broadcast receiving terminal, s/he can cause that scene of interest to be displayed in the display unit 120. Therefore, even when the user is absorbed in e-mail, games, etc, s/he missing a program or scene of interest can be prevented. In other words, power conservation can be achieved and the user does not miss a program or scene that s/he likes.

### (First Variation)

Here, a variation regarding a trigger which causes a transition between the normal presentation state and the background state is explained.

In the above embodiment, transition between each of the aforementioned states is executed with the activation or termination of the additional functions as a trigger.

In the present variation, transition between each of the aforementioned states is executed with the alteration of the form of the broadcast receiving terminal as a trigger.
In other words, the broadcast receiving terminal in the present variation is configured of a form that is freely alterable, so that when the display screen of the display unit is hidden through alteration of the form, the broadcast receiving function is caused to transit from the normal presentation state to the background state.

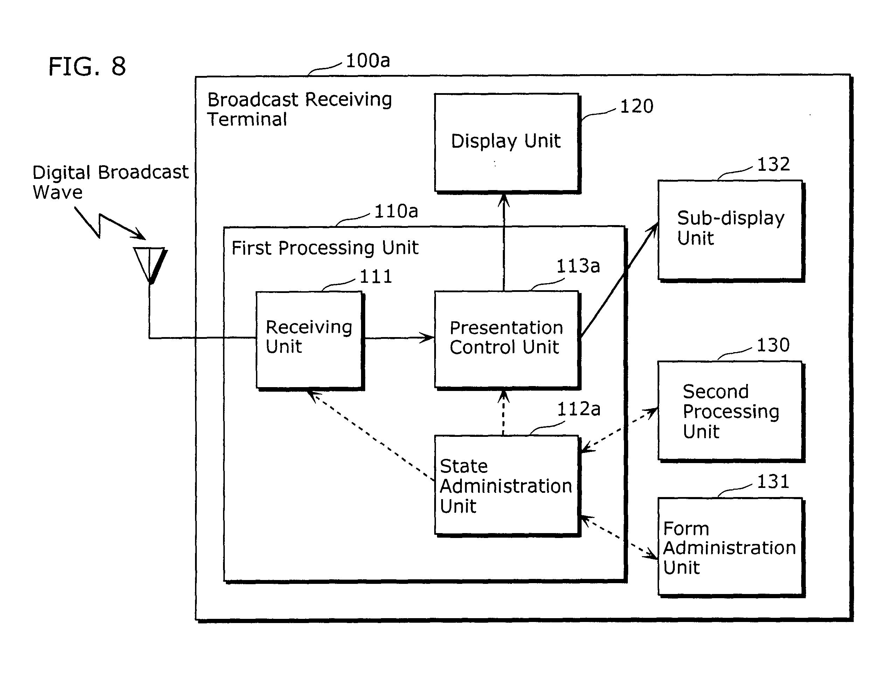

FIG. 8 is a block diagram showing a configuration of a broadcast receiving terminal in the present variation.
A broadcast receiving terminal 100a is, for example, a cellular phone configured to be freely foldable, and includes a display unit 120, a first processing unit 110a, a second processing unit 130, a form administration unit 131, and a sub-display unit 132.

The display unit 120 is mounted in a position so that the display screen is hidden when the broadcast receiving terminal 100 is closed.

The sub-display unit 132 is, as with the display unit 120, configured of an LCD, etc, and is mounted in a position so that the display screen appears on the outer surface when the broadcast receiving terminal 100a is closed.

Note that although the number of the sub-display units 132 here is one, two or more are also acceptable. In such a case, a control is executed, such as selecting the sub-display unit 132 that is presentable to the user from the plurality of sub-display units 132, in accordance with the alteration of the form.

The form administration unit 131 monitors the form of the broadcast receiving terminal 100a, and notifies the first processing unit 110a of that form. For example, the form administration unit 131 notifies that the broadcast receiving terminal 100a is in a folded form (a closed form) or in an expanded form (an opened form), and the like.

The first processing unit 110a includes a receiving unit 111, a presentation control unit 113a, and a state administration unit 112a.

The state administration unit 112a judges whether the broadcast receiving function should be in a normal presentation state or in a background state based on a notification from the form administration unit 131. Then, the state administration unit 131 notifies the receiving unit 111 and the presentation control unit 113a of the state of the broadcast receiving function that was judged.

For example, when the state administration unit 112a receives a notification of the closed form from the form administration unit 131, it judges that the broadcast receiving function should be in the background state. Additionally, when the state administration unit 112a receives a notification of the opened form from the form administration unit 131, it judges that the broadcast receiving unit should be in the normal presentation state.

The presentation control unit 113a controls a display of the display unit 120 and the sub-display unit 132 in accordance with a notification from the state administration unit 112a. In other words, if, when the broadcast receiving function is activated, the presentation control unit 113a receives a notification that the broadcast receiving function should be in the normal presentation state, TV program content of a digital broadcast are projected in the main area 122 of the display unit 120; and, when the presentation control unit 113a receives a notification that the broadcast receiving function should be in the background state, the presentation control unit 113a causes an outline of the real-time TV program information to be displayed as a character string in the sub-display unit 132.

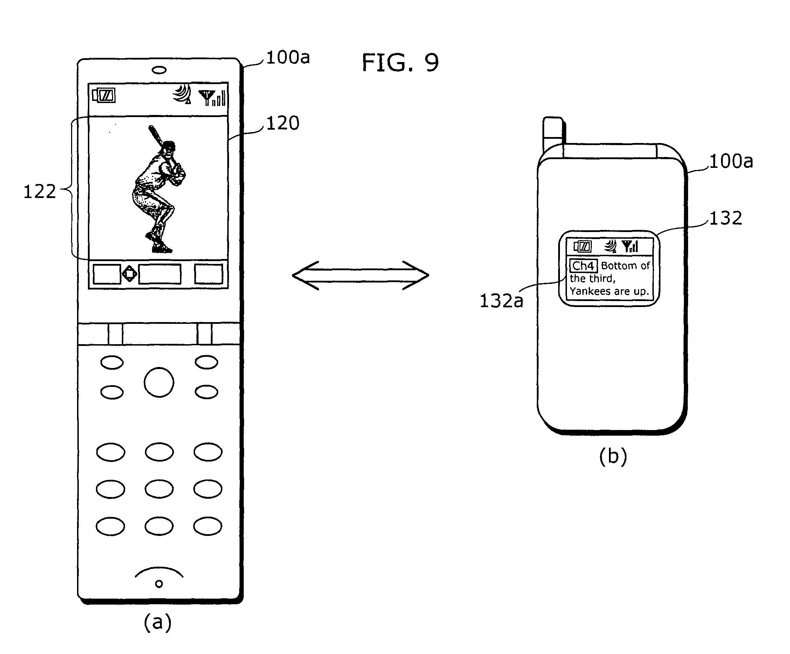

FIG. 9 is a diagram showing one example of the display screen of the display unit 120 and the sub-display unit 132.
The user puts the broadcast receiving terminal 10a in the opened form, and activates the broadcasting receiving function by, for example, selecting a TV button b1. As a result, because the first processing unit 110a receives a notification of the opened form from the form administration unit 131 when the broadcast receiving function is activated, the TV program content of the digital broadcast are displayed in the main area 122 of the display unit 120, as shown in (a) of FIG. 9. At this time, the broadcast receiving function is in the normal presentation state.

Here, the user alters the form of the broadcast receiving terminal 100a to the closed form. As a result, because the first processing unit 110a receives a notification of the closed form from the form administration unit 131 while the broadcast receiving function is active, the first processing unit 110a causes the outline of the real-time TV program information to be displayed as a character string in a main area 132a of the sub-display unit 132, as shown in (b) of FIG. 9. The first processing unit 110a causes the character string that is the outline to scroll in, for example, a horizontal or vertical direction. At this time, the broadcast receiving function is in the background state.

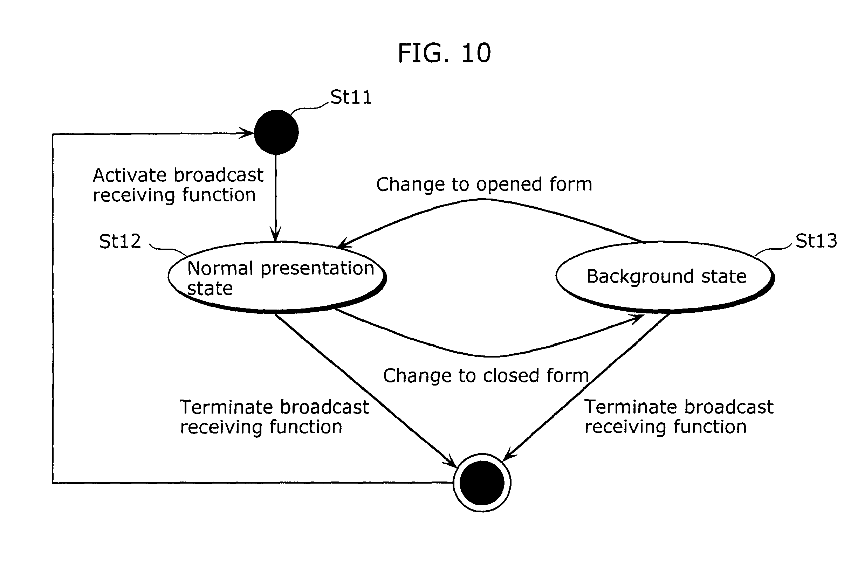

FIG. 10 is a state-transition diagram of the broadcast receiving function of the broadcast receiving terminal 110a in the present variation.
In the states of the broadcast receiving function of the broadcast receiving terminal 100a, there is a stop state St11, for when the operation based on that function is not being executed, as well as the aforementioned normal presentation state St12 and the background state St13.

For example, when the broadcast receiving function is activated by the selection of the TV button b1, the state is transited from the stop state St11 to the normal presentation state St12.

The normal presentation state St12 is transited to the background state St13 when the form of the broadcast receiving terminal 100a is altered from the opened form to the closed form. Additionally, the normal presentation form St12 returns to the stop state St11 when the broadcast receiving function is terminated, for example, by the selection of TV End button b3.

The background state St13 is transited to the normal presentation state St12 when the form of the broadcast receiving terminal 100a is altered from the closed form to the opened form. Additionally, the background state St13 returns to the stop state 5t11 when the broadcast receiving function is terminated, for example, through the selection of a predetermined button.

In this manner, in the present variation, the TV program content are displayed in the display unit 120 when the broadcast receiving terminal 100a is in the opened form, and the outline of the TV program content synchronized with those TV program content is displayed in the sub-display unit 132 when the broadcast receiving terminal is in the closed form. Therefore, the user can, by altering the form of the broadcast receiving terminal 100a, switch freely between the display of the TV program content and the display of the outline, and cut down on power consumption.

### (Second Variation)

Here, another variation regarding a trigger which causes a transition between the normal presentation state and the background state is explained.

In the above embodiment, transition between each of the aforementioned states is executed with the activation or termination of the additional functions as a trigger.

In the present variation, transition between each of the aforementioned states is executed with direct instruction from the user as a trigger, which is based on the state of the broadcast receiving function.

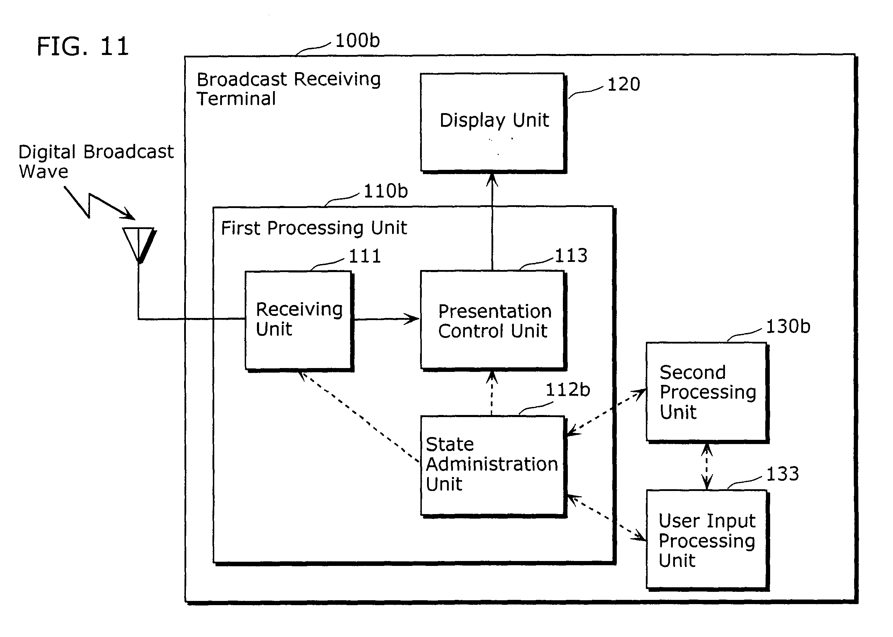

FIG. 11 is a block diagram showing the configuration of a broadcast receiving terminal in the present variation.
A broadcast receiving terminal 100b includes a display unit 120, a first processing unit 110b, a second processing unit 130b, and a user input processing unit 133.

The user input processing unit 133 receives instruction regarding whether to put the broadcast receiving function in a normal presentation state or a background state based on the user's operation. Then, the user input processing unit 133 notifies the first processing unit 110b and the second processing unit 130b of the instruction details received.

The second processing unit 130b activates and terminates additional functions in response to the user's operations, as well as controlling the display unit 120 to display/not display a screen based on the active additional functions, in accordance with the notification from the first processing unit 110b and the user input processing unit 133.

For example, when the second processing unit 130b receives a notification of the normal presentation state from the user input processing unit 133, use of the display unit 120 by the first processing unit 110b is allowed even when an additional function is active, and the second processing unit 130b does not cause the screen based on the additional function to be displayed in the display unit 120. On the other hand, when the second processing unit 130b receives a notification of the background state from the user input processing unit 133, the second processing unit 130b causes the screen based on the active additional functions to be displayed in the display unit 120.

The first processing unit 110b includes a receiving unit 111, a presentation control unit 113, and a state administration unit 112b.

The state administration unit 112b notifies the second processing unit 130b of the activation and termination of the broadcast receiving function, as well as judging whether the broadcast receiving function should be in the normal presentation state or the background state based on the notification details of a notification received from the user input processing unit 133. Then, the state administration unit 112b notifies the receiving unit 111 and the presentation control unit 113 of the judged state. Note that as an initial setting, when the broadcast receiving function is activated, the state administration unit 112b notifies the receiving unit 111 and the presentation control unit 113 of normal presentation state, even without a notification from the user input processing unit 133.

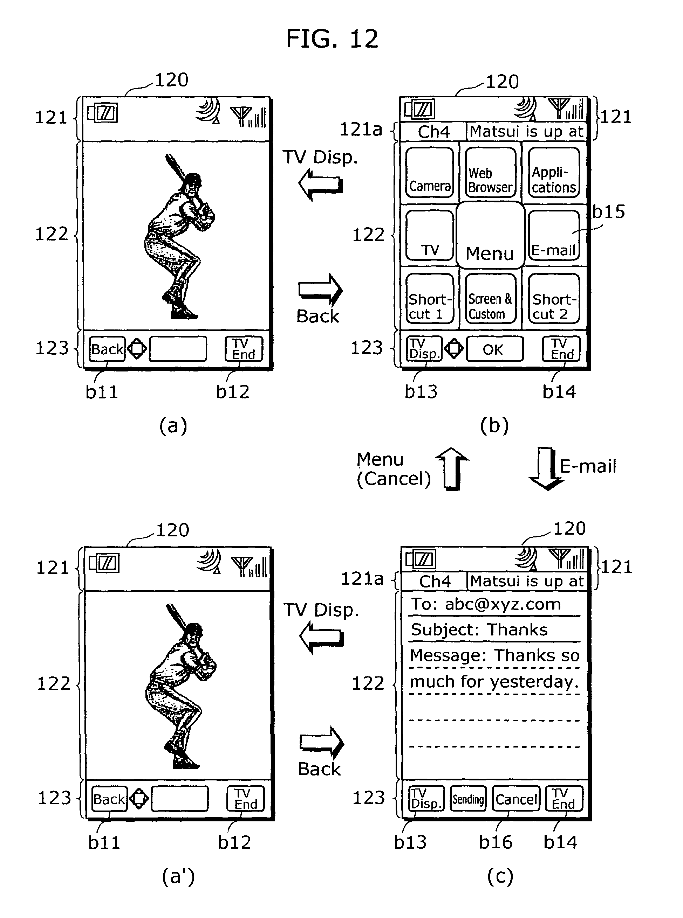

FIG. 12 is a diagram showing one example of an image display of the display unit 120.
When a TV button b1 is selected in the state shown in (a) of FIG. 5, the broadcast receiving function is activated and goes into the normal presentation state, and a screen displayed in the display unit 120 is the screen as shown in (a) of FIG. 12.

In other words, the first processing unit 110b receives a digital broadcast wave through the activation of the broadcast receiving function, and causes the TV program content of the digital broadcast to be projected in the main area 122 of the display unit 120. Then, the first processing unit 110b notifies the second processing unit 130b of the activation of the broadcast receiving function.

When the second processing unit 130b receives the notification of the activation of the broadcast receiving function from the first processing unit 110b, the second processing unit 130 causes the display of a menu in the display unit 120 to stop, without terminating a menu launcher function.

At this time, the display unit 120 displays, in a guidance area 123, a Back button b11 for returning to the menu screen, and a TV End button b12 for terminating the display of the TV program content and the reception of the digital broadcast wave.

When the TV End button b12 is selected through the user's operation, the broadcast receiving function is terminated, and the screen displayed in the display unit 120 returns to the screen shown in (a) of FIG. 5.

In other words, the first processing unit 110b terminates the broadcast receiving function (terminates the processes of receiving the digital broadcast wave, extracting the stream information, etc) and notifies the second processing unit 130b of that termination. When the second processing unit 130b receives the notification of the termination of the digital broadcast function from the first processing unit 110b, the second processing unit 130b causes a menu based on the active menu launcher function to be displayed in the main area 122 of the display unit 120.

When the Back button b11 is selected through the user's operation, the broadcast receiving function goes into the background state, and the screen displayed in the display unit 120 is a screen as is shown in (b) of FIG. 12.

In other words, based on the selection of the Back button b11, the user input processing unit receives an instruction indicating the broadcast receiving function should be in a background state, and notifies the first processing unit 110b and the second processing unit 130b of those instruction details. When the first processing unit 110b receives the notification from the user input processing unit 133, the first processing unit 110b causes projection of the TV program content in the main area 122 of the display unit 120 to stop, and causes details of real-time TV program information (an outline of the TV program content) to be displayed as a character string in a pict area 121 (an information presentation area 121a) of the display unit 120. When the second processing unit 130b receives the notification from the user input processing unit 133, the second processing unit 130b causes a menu based on the active menu launcher function to be displayed in the main area 122 of the display unit 120.

At this time, the display unit 120 displays, in a guidance area 123, a TV Disp. button b13 for projecting the TV program content, and a TV End button b14 for terminating the display of the outline and the reception of the digital broadcast wave.

When the TV Disp. button b13 is selected through the user's operations, the broadcast receiving function goes into the normal presentation state, and the screen displayed in the display unit 120 is a screen as shown in (a) of FIG. 12.

In other words, the user input processing unit 133 receives the instruction that the broadcast receiving function should be in the normal presentation state based on the selection of the TV Disp. button b13, and notifies the first processing unit 110b and the second processing unit 130b of those instruction details. When the second processing unit 130b receives the notification from the user input processing unit 133, the second processing unit 130b causes the display of the menu in the display unit 120 to stop without causing the menu launcher function to be terminated. When the first processing unit 110b receives the notification from the user input processing unit 133, the first processing unit 110b causes the display of the outline in the information presentation area 121a of the display unit 120 to stop, and causes the TV program content to be displayed in the main area 122 of the display unit 120.

When the TV End button b14 is selected through the user's operation, as mentioned above, the broadcast receiving function is terminated, and the screen displayed in the display unit 120 is a screen as shown in (a) of FIG. 5. In other words, the first processing unit 110b terminates the broadcast receiving function (terminates the processes of the reception of the digital broadcast wave, the extraction of the real-time TV program information, etc) and causes the display of the outline in the information presentation area 121a of the display unit 120 to stop.

In addition, when the e-mail button b15, one of the buttons corresponding to the various functions included in the menu, is selected by the user, the screen displayed in the display unit 120 is a screen as shown in (c) of FIG. 12.

In other words, the second processing unit 130b terminates the menu launcher function and activates the e-mail function instead. The result is that the second processing unit 130b causes an e-mail editing screen based on the e-mail function to be displayed in the main area 122 of the display unit 120. At this time, the broadcast receiving function is in the background state, and the first processing unit 110b causes an outline of the real-time TV program information to be displayed as a character string in the pict area 121 (the information presentation area 121a) of the display unit 120.

Also at this time, the display unit 120 displays, in a guidance area 123, the aforementioned TV Disp. button b13 and the TV End button b14, as well as a cancel button b16 for terminating the e-mail function.

When the TV Disp. button is selected through the user's operation, as above, the broadcast receiving function goes into the normal presentation state, and the screen displayed in the display unit 120 is a screen as shown in (a') of FIG. 12.

When the cancel button b16 is selected through the user's operation, the screen displayed in the display unit 120 returns to a screen as shown in (b) of FIG. 12. In other words, the second processing unit 130b terminates the e-mail function and activates the menu launcher function instead.

When the TV End button b14 is selected through the user's operation, the first processing unit 110b terminates the broadcast receiving function, and causes the display of the outline in the information presentation area 121a of the display unit 120 to stop.

In addition, when the screen displayed in the display unit 120 is the screen as shown in the aforementioned (a') of FIG. 12, when the Back button b11 is selected through the user's operation, the broadcast receiving function goes into the background state, and the screen displayed in the display unit 120 is a screen as shown in (c) of FIG. 12. In other words, the e-mail editing screen that was displayed before is displayed in the main area 122 of the display unit 120, and the outline of the real-time TV program information is displayed as a character string in the pict area 121 of the display unit 120.

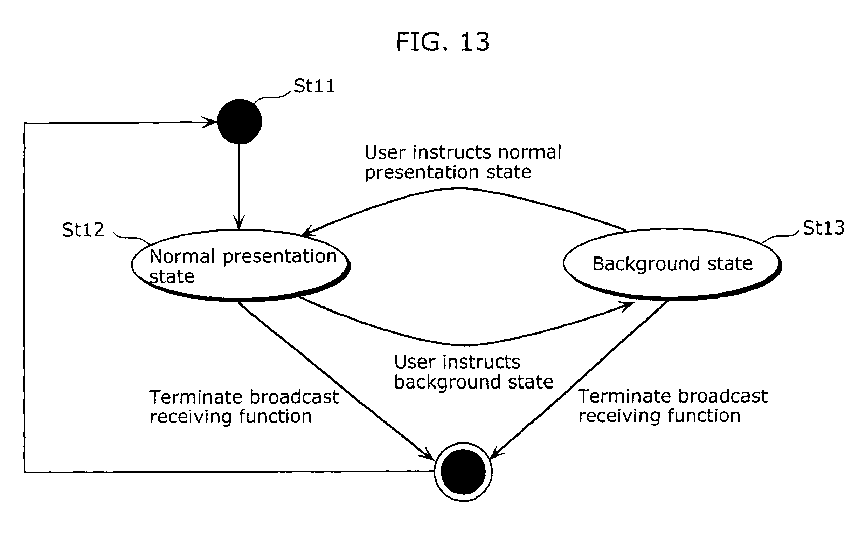

FIG. 13 is a state-transition diagram of the broadcast receiving function of the broadcast receiving terminal 100b in the present variation.
In the states of the broadcast receiving function of the broadcast receiving terminal 100b, there is a stop state St11, for when the operation based on that function is not being executed, as well as the aforementioned normal presentation state St12 and the background state St13.

For example, when the broadcast receiving function is activated through selection of the TV button b1, the state is transited from the stop state St11 to the normal presentation state St12.

For example, when the Back button b11 is selected by the user, the normal presentation state St12 is transited to the background state St13. Additionally, for example, when the broadcast receiving function is terminated through the selection of the TV End button b14, the normal presentation state St12 returns to the stop state St11.

For example, when the TV Disp. button b13 is selected by the user, the background state St13 is transited to the normal presentation state St12. Additionally, for example, when the broadcast receiving function is terminated through the selection of the TV End button b14, the background state St13 returns to the stop state St11.

In the present variation, the instructions regarding whether to put the broadcast receiving function into the normal presentation state or the background state are received from the user, and the state of the broadcast receiving function is transited based on those received instructions. Therefore, the user, through those instructions to the broadcast receiving terminal 100b, can freely switch between displaying the TV program content and the outline details, and can cut down on power consumption.

### (Third Variation)

Here, a variation, in which the acquisition of real-time TV program information and the timing of the presentation of the details of that real-time TV program information in the present embodiment, is explained.

In the present embodiment, when the broadcast receiving terminal 100 acquires the real-time TV program information, it executes a presentation processing for presenting the details of that real-time TV program information and presents those details directly.

The broadcast receiving terminal in the present variation acquires real-time TV program information which includes time information indicating the time to be presented, and at the time indicated by that time information, executes a presentation processing and presents the details of the real-time TV program information. On the other hand, an information generating unit 203 of a broadcast apparatus 200 in the present variation refers to a stream information of a stream generating unit 201 and a data carousel of a data carousel generating unit 202, and specifies when the outline of those should be presented. Then, the information generating unit 203 outputs, included in the real-time TV program information, the time information indicating that time.

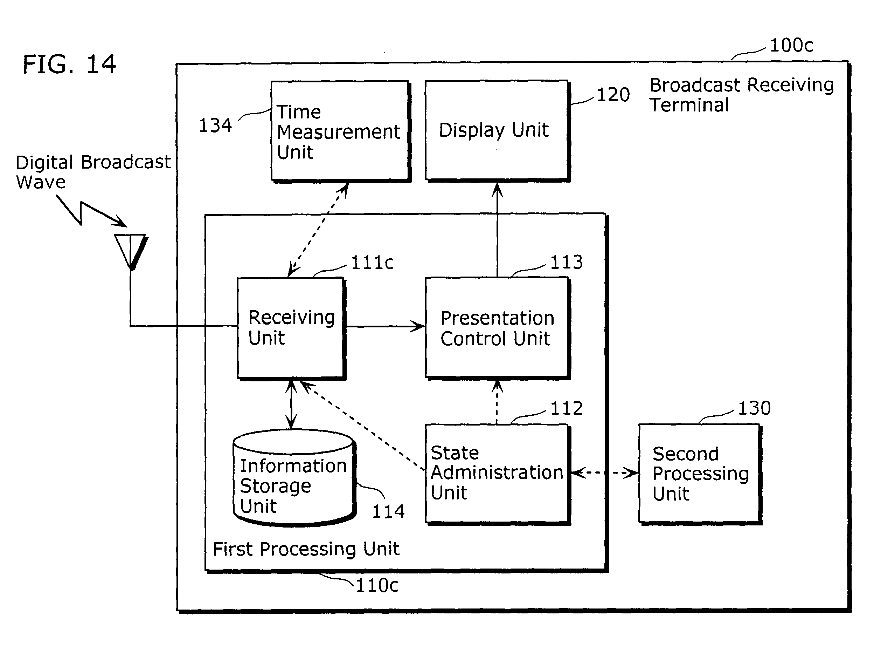

FIG. 14 is a block diagram showing the configuration of the broadcast receiving terminal in the present variation.
The broadcast receiving terminal 100c in the present variation includes a display unit 120, a first processing unit 110 c, a second processing unit 130, and a time measurement unit 134.

The time measurement unit 134 clocks the present time and notifies the first processing unit 110c of that present time.

The first processing unit 110c includes a receiving unit 111c, a presentation control unit 113, a state administration unit 112, and an information storage unit 114.

The information storage unit 114 has an area for storing the real-time TV program information.
When the receiving unit 111c receives a digital broadcast wave while the broadcast receiving function is in the background state, the receiving unit 111c extracts, from that digital broadcast wave, the real-time TV program information which includes the time information, and causes this real-time TV program information to be stored in the information storage unit 114. Then, the receiving unit 111c compares the present time as notified from the time measurement unit 134 with the time indicated by the time information of the real-time TV program information stored in the information storage unit 114. When the time indicated by that time information equals the present time, the receiving unit 111c reads out the real-time TV program information which includes that time information from the information storage unit 114, and outputs the real-time TV program information to the presentation control unit 113.

When the presentation control unit 113 acquires the real-time TV program information from the receiving unit 111c, the presentation control unit 113 causes an outline indicating that real-time TV program information to be displayed as a character string in the display unit 120. The outline displayed at this time is synchronized with the TV program content of the digital broadcast wave.

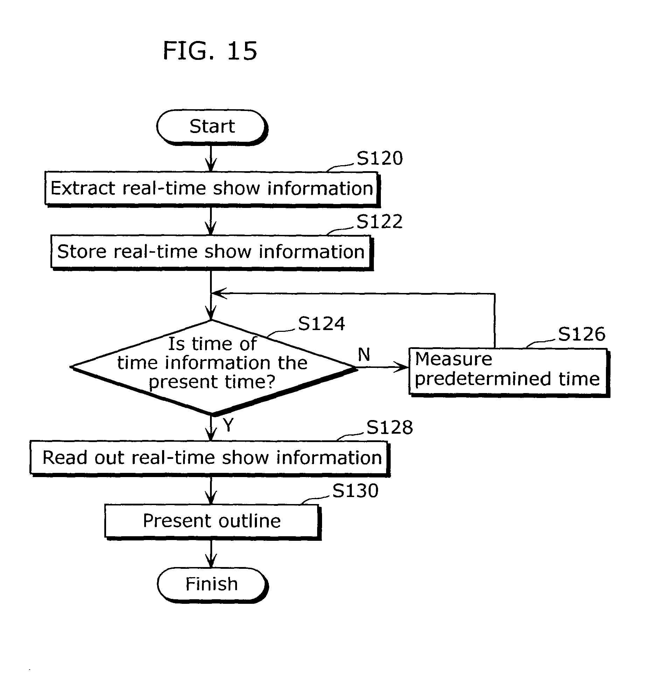

FIG. 15 is a flowchart showing an operation occurring in the background state of the broadcast receiving terminal 100c in the present variation.

First, the broadcast receiving terminal 100c receives the digital broadcast wave through the activation of the broadcast receiving function, and extracts the real-time TV program information from that digital broadcast wave (step S120). Then, the broadcast receiving terminal 100c stores that extracted real-time TV program information in the information storage unit 114 (step S122).

The broadcast receiving terminal 100c, which stored the real-time TV program information, judges whether or not the time indicated by the time information stored in that real-time TV program information matches with the present time (step S124).

Here, when the time is judged as not matching (N of step S124), the broadcast receiving terminal 100c executes time measurement of only a predetermined time, such as 1 second, 5 seconds, etc, and again executes the processing in step S124 after the predetermined time has passed.

On the other hand, when the time is judged as matching (Y of step 124), the broadcast receiving terminal reads out the real-time TV program information stored in the information storage unit 114, and displays the details of that real-time TV program information (the outline) in the display unit 120 (step S130).

Note that in the present variation, the time information was included in the real-time TV program information, but it does not have to be included. In other words, the broadcast apparatus 200 sends a digital broadcast wave which includes a message prompting the presentation of the outline. When the receiving unit 111c of the broadcast receiving unit 100c receives the aforementioned message, it reads out the real-time TV program information already stored in the information storage unit 114, and outputs that real-time TV program information to the presentation control unit 113. Then, when the presentation control unit 113 acquires the real-time TV program information from the receiving unit 111c, the presentation control unit 113 causes an outline indicating that real-time TV program information to display as a character string in the display unit 120.

In addition, in the present variation, the outline indicating the real-time TV program information is displayed as being synchronized with the TV program content of the digital broadcast wave, but it does not have to be synchronized. For example, the broadcast receiving terminal occasionally stores, in the information storage unit 114, the real-time TV program information which was transmitted multiplexed in the digital broadcast wave. Then, when the broadcast receiving terminal 100c receives an instruction from the user prompting the display of the outline, it reads out the real-time TV program information stored in the information storage unit 114, and displays that outline in the display unit 120. Through this, the user can know, from the outline displayed in the display unit 120, what kind of TV program was being broadcast, after the fact.

### (Fourth Variation)

Here, another variation in the present embodiment, relating to a presentation method of the details of the real-time TV program information, is explained.

In the first embodiment of the present invention, the broadcast receiving terminal 100 displays the details of the real-time TV program information as a character string in the display unit 120.

In the present variation, the broadcast receiving terminal presents the details of the real-time TV program information as voice.

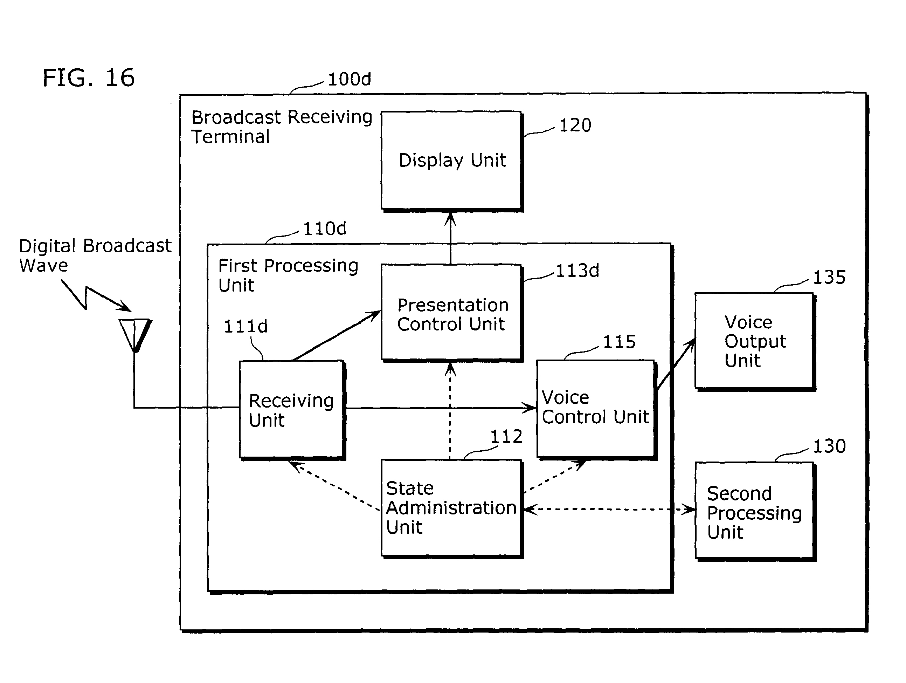

[FIG. 16] FIG. 16 is a block diagram showing the configuration of the broadcast receiving terminal in the present fourth variation.

The broadcast receiving terminal 100d in the present variation includes a display unit 120, a first processing unit 110d, a second processing unit 130, and a voice output unit 135.

The first processing unit 110d includes a receiving unit 111d, a state administration unit 112, a presentation control unit 113d, and a voice control unit 115.

The receiving unit 111d outputs stream information and a data carousel extracted from a digital broadcast wave to the presentation control unit 113d, and outputs the real-time TV program information extracted from the digital broadcast wave to the voice control unit 115.

When the broadcast receiving function is in the background state, the presentation control unit 113d stops the control of the display screen in the display unit 120. In other words, the presentation control unit 113d does not execute the display of the details of the real-time TV program information in the display unit 120, as the aforementioned presentation control unit 113 did.

When the broadcast receiving function is in the background state, the voice control unit 115 acquires the real-time TV program information from the receiving unit 111d and analyzes the details of that real-time TV program information (the outline of the TV program content). Then, the voice control unit 115, through voice synthesis, generates a voice signal indicating those details, and outputs that voice signal to the voice output unit 135.

The voice output unit 135 is composed, for example, of a speaker and the like, and acquires the voice signal form the first processing unit 110d, and then outputs a voice indicating that voice signal.

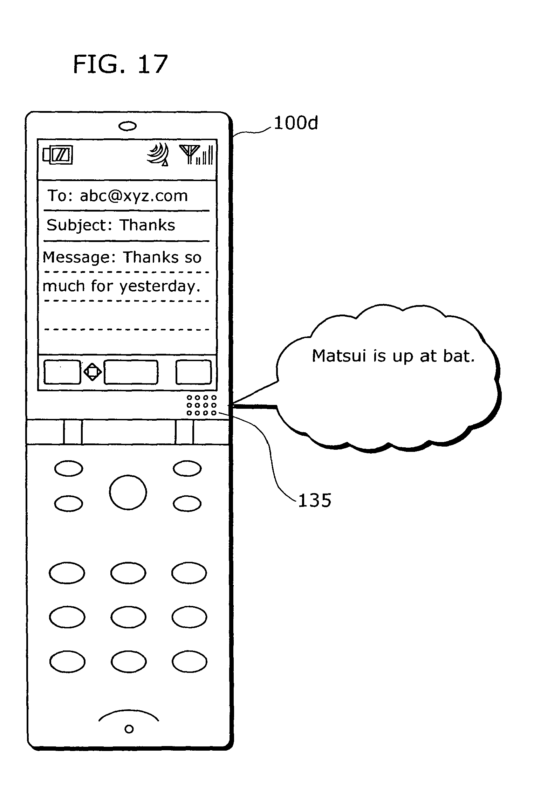

FIG. 17 is an explanatory drawing to explain the appearance when the broadcast receiving function of the broadcast receiving terminal 100d is in the background state in the present variation.

For example, the broadcast receiving terminal 100d is configured as a cellular phone, and when the broadcast receiving function is in the background state, an e-mail editing screen based on an e-mail function is displayed in the display unit 120. In such a case, the broadcast receiving terminal 100d outputs, as the details of the real-time TV program information, a voice saying "Matsui is up at bat" from the voice output unit 135.

Through this present variation, by notifying the outline of the TV program content by voice, the user does not need to focus on the broadcast receiving terminal 100d, improving the usability for the user, as compared to a case where the outline is displayed as a character string.

Note that, in the present variation, the real-time TV program information is configured as text data and synthesized to voice in the broadcast receiving terminal 100d, but the real-time TV program information may also be configured as a voice signal. In such a case, the voice control unit 115 outputs the real-time TV program information acquired from the receiving unit 111d to the voice output unit 135, without executing processing such as voice synthesis, etc, on that real-time TV program information. Through this, the processing load on the voice control unit 115 can be lightened.

In addition, in the present variation, the details of the real-time TV program information (in other words, the outline of the TV program content) were outputted as voice, but, for example, a sound such as "beep" or a voice saying "here is a highlight" may also be outputted. For example, when a TV program or scene of interest to the user is broadcast, the broadcast receiving terminal 100d makes one of the aforementioned sounds. Here, the broadcast receiving device 100d judges whether or not the TV program content of the digital broadcast wave is a TV program or scene of interest to the user based on, for example, a pre-registered TV program or scene. Additionally, the broadcast receiving terminal 100d judges whether or not the TV program content of the digital broadcast wave is a TV program or scene of interest to the user based on a flag, etc, included in the digital broadcast wave.

In addition, in the present variation, the outline of the TV program content were output as voice when the broadcast receiving function is in the background state, but the voice of the TV program content may also be outputted. For example, the broadcast receiving terminal in the background state, through analyzing the voice of the TV program content, outputs, for example, only a keyword (important point) included in the voice, or outputs that keyword at a higher volume level than the other voice. Here, the broadcast receiving device 100d isolates that keyword from the voice of the TV program content based on, for example, a pre-registered keyword. Additionally, the broadcast receiving terminal 100d isolates the aforementioned keyword from the voice of the TV program content based on a flag, etc, included in the digital broadcast wave.

Furthermore, in the present variation, the outline of the TV program content was output as voice, but the outline can also be caused to be displayed as a character string in the display unit 120 at the same time as the voice output.

### (Fifth Variation)

Here, another variation in the present embodiment, relating to a presentation method of the details of the real-time TV program information, is explained.

In the first embodiment of the present invention, the broadcast receiving terminal 100 causes the details of the real-time TV program information to be displayed as a character string in the display unit 120.

The broadcast receiving unit in the present variation presents the details of the real-time TV program information as a comparatively small moving picture and as the character string.

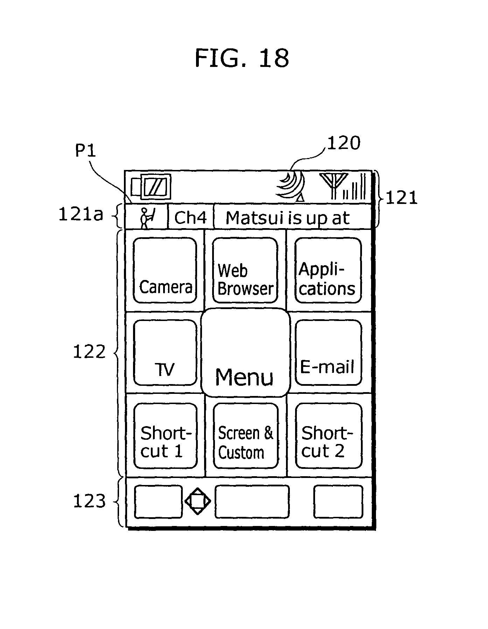

FIG. 18 is a diagram showing one example of a display screen of the display unit 120 when the broadcast receiving function is in the background state, in the present variation.

When the broadcast receiving function is in the background state, the first processing unit of the broadcast receiving terminal in the present variation displays the details of the real-time TV program information as a character string in the display unit 120, while also extracting the stream information from the digital broadcast wave and decoding that stream information. The decoding executed here has a lower image quality than that of the decoding executed in the normal presentation state, so less power is consumed. For example, the first processing unit decodes so that the image quality becomes coarse. Then, as shown in FIG. 18, the first processing unit causes the details of the decoded stream information to be displayed as a small moving picture (simple picture) P1 in the information presentation area 121a of the display unit 120.

In this manner, in the present variation, the outline of the TV program content is displayed as the simple picture P1, with a lowered image quality, and a character string, when the broadcast receiving function is in the background state. Because of this, when the user puts the broadcast receiving function of the broadcast receiving terminal in the background state, the power consumption of the broadcast receiving terminal can be cut down, while also preventing the user from missing a scene s/he likes.

Note that the broadcast receiving terminal in the present variation displayed a small simple picture P1 in the information presentation area 121a using the stream information, but the simple picture P1 may also be displayed using the real-time TV program information. In other words, the real-time TV program information includes text data indicating the outline, and picture data for displaying the aforementioned simple picture P1. For example, that picture data is configured in Graphic Interchange Format (GIF) or Multiple-Image Network Graphics (MNG) format. In the background state, the broadcast receiving terminal executes image processing of the image data of the real-time TV program information. Then, the broadcast receiving terminal displays, in information presentation area 121a of the display unit 120, a character string based on the text data on the real-time TV program information, and the simple image P1 based on the picture data of the real-time TV program information. Additionally, the broadcast receiving terminal may also display the simple picture P1 as a still picture. In this case, the picture data is configured in Joint Photographic Experts Group (JPEG) or Portable Network Graphics (PNG) format.

In addition, in the present variation, the outline of the TV program content was presented as the simple picture P1, but a TV program or scene of interest to the user can also be indicated through a vibration, etc.

In addition, in the present variation, when the broadcast receiving function is in the background state, the outline was displayed as the simple picture P1 and the character string, but displaying only the simple picture P1 is also acceptable.

### (Sixth Variation)

Here, another variation in the present embodiment, relating to the state transition on the broadcast receiving function in the broadcast receiving terminal, is explained.

In the broadcast receiving terminal in the first embodiment of the present invention, the state of the activated broadcast receiving function is transited only between the normal presentation state and the background state.

In the broadcast receiving terminal in the present variation, the activated broadcast receiving function is further transited to a locked state, explained later.

In addition, in the broadcast apparatus in the present variation, the digital broadcast wave includes a lock flag, which transits the state of the broadcast receiving function of the broadcast receiving terminal to the locked state, and a release flag, for transiting the broadcast receiving function from the locked state to another state. The broadcast apparatus transmits this kind of digital broadcast wave.

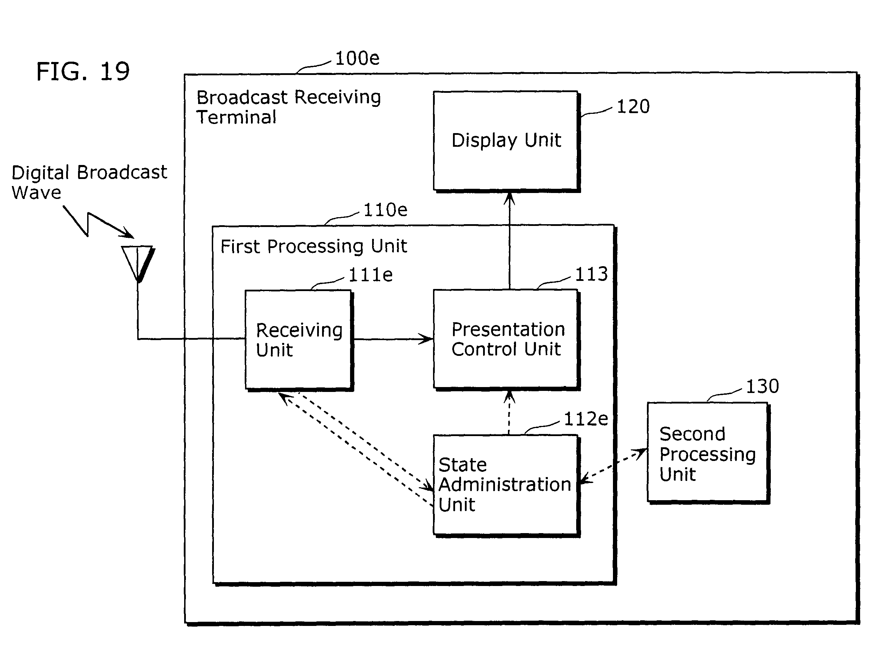

FIG. 19 is a block diagram showing a configuration of a broadcast receiving terminal in the present variation.
In the present variation, a broadcast receiving terminal 100e includes a display unit 120, a first processing unit 110e, and a second processing unit 130.

The first processing unit 110e includes a receiving unit 111e, a state administration unit 112e, and a presentation control unit 113.

When the receiving unit 111e receives a digital broadcast wave through activation of the broadcast receiving function, the receiving unit 111e judges whether or not the lock flag or the release flag is included in the digital broadcast wave. When the lock flag or the release flag is judged as being included, the receiving unit 111e notifies the state administration unit 112e that the lock flag or the release flag is included.

When the broadcast receiving function is in the normal presentation state, when the state administration unit 112e receives notification of the lock flag from the receiving unit 111e, the state administration unit 112e locks the second processing unit 130 from activating the additional functions. In this manner, when the digital broadcast wave is received and the TV program content of the digital broadcast are being projected, the second processing unit 130 is locked from activating the additional functions, and the state in which the TV program content are continuously displayed is called the locked state.

On the other hand, when the state administration unit 112e receives a notification of the release flag after receiving a notification of the lock flag from the receiving unit 111e, the aforementioned lock on the second processing unit 130 is released.

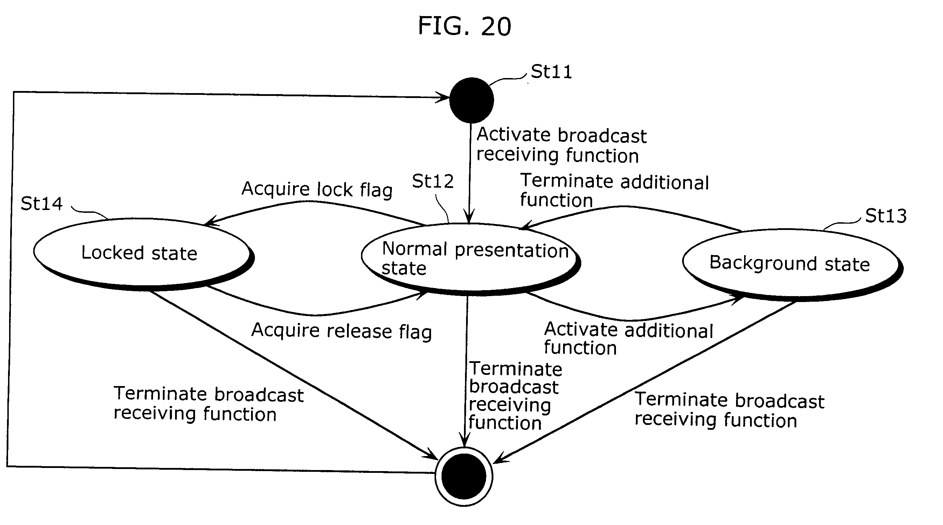

FIG. 20 is a state-transition diagram of the broadcast receiving function of the broadcast receiving terminal 100e in the present variation.
In the states of the broadcast receiving function of the broadcast receiving terminal 100e, there is a stop state St11, for when the operation based on that function is not being executed, as well as the aforementioned normal presentation state St12 and the background state St13, and a lock state St14.

For example, when the broadcast receiving function is activated through selection of the TV button b1, the state is transited from the stop state St11 to the normal presentation state St12.

For example, when the menu launcher function is activated through the selection of the Menu button b2, the normal presentation state St12 is transited to the background state St13. Additionally, for example, when the broadcast receiving function is terminated through the selection of the TV End button b3, the normal presentation state St12 returns to the stop state St11. Furthermore, the normal presentation state St12 is transited to the lock state St14 when a lock flag is acquired.

The lock state St14 is transited to the normal presentation state St12 when a release flag is acquired, and returns to the stop state St11 when, for example, the broadcast receiving function is terminated through the selection of the TV End button b3.

For example, when the menu launcher function is terminated through the selection of the Menu End button b4, the background state St13 is transited to the normal presentation state St12. Additionally, for example, when the broadcast receiving function is terminated through the selection of the TV End button b3, the background state St13 returns to the stop state St11.

### Industrial Applicability

The broadcast receiving terminal and broadcast apparatus of the present invention feature the effect of improving power conservation, and of the user not missing TV program content s/he likes. This broadcast receiving terminal can be applied in, for example, a cellular phone, a Personal Digital Assistant (PDA), a digital camera, etc.

## Claims

1. A broadcast receiving terminal which receives a broadcast wave and displays broadcast contents,
wherein the broadcast wave includes stream information indicating broadcast contents, and outline information indicating an outline of the broadcast contents, and
said broadcast receiving terminal comprises:
a receiving unit operable to receive the broadcast wave;
a display unit operable to display the broadcast contents;
a judging unit operable to judge, based on a user's operation, whether or not the broadcast contents should be displayed;
a display control unit operable to perform image processing on the stream information of the broadcast wave received by said receiving unit, and to cause said display unit to display the broadcast contents, when said judging unit judges that the broadcast contents should be displayed; and
an outline presentation unit operable to present the outline, so that the outline synchronizes with the broadcast contents, which is indicated by the outline information transmitted by the broadcast wave received by said receiving unit, when said judging unit judges that the broadcast contents should not be displayed.

2. The broadcast receiving terminal according to Claim 1,
wherein said broadcast receiving terminal further comprises
a function processing unit operable to activate and terminate a predetermined function based on a user's operation, and
said judging unit is operable to judge that the broadcast contents should not be displayed, when the predetermined function is activated, and to judge that the broadcast contents should be displayed, when the predetermined function is terminated.

3. The broadcast receiving terminal according to Claim 2,
wherein said outline presentation unit is operable to cause said display unit to display the outline as a character string.

4. The broadcast receiving terminal according to Claim 3,
wherein said display unit has a first display area, and a second display area smaller than the first display area,
said display control unit is operable to display the broadcast contents in the first display area, and
said outline presentation unit is operable to display the outline in the second display area.

5. The broadcast receiving terminal according to Claim 2,
wherein said outline presentation unit is operable to notify the user of the outline indicated by the outline information with a voice.

6. The broadcast receiving terminal according to Claim 2,
wherein the outline information includes time information indicating the time when the outline should be presented, and
said outline presentation unit is operable to present the outline when the present time matches the time indicated by the time information.

7. The broadcast receiving terminal according to Claim 2,
wherein said outline presentation unit is further operable to perform image processing on the stream information of the broadcast wave received by said receiving unit, and to cause said display unit to display a moving picture with a lower image quality than the broadcast contents displayed by said display control unit, when said judging unit judges that broadcast contents should not be displayed.

8. The broadcast receiving terminal according to Claim 2,
wherein the broadcast wave includes limit information which limits judgment of said judging unit, and
said judging unit is operable to maintain the results of judgments already made, regardless of a user's operation, when the limit information is received by said receiving unit.

9. The broadcast receiving terminal according to Claim 1, further comprising
a reception unit operable to receive an instruction to display/not display the broadcast contents, based on the user's operation,
wherein said judging unit is operable to judge that the broadcast contents should be displayed, when an instruction to display is received by said reception unit, and operable to judge that the broadcast contents should not be displayed, when an instruction not to display is received by said reception unit.

10. The broadcast receiving terminal according to Claim 1,
wherein said broadcast receiving terminal is configured in first and second forms, which can be switched between in accordance with a user's operation; and
said judging unit is operable to judge that the broadcast contents should be displayed, when said broadcast receiving terminal is in the first form, and to judge that the broadcast contents should not be displayed, when said broadcast receiving terminal is in the second form.

11. The broadcast receiving terminal according to Claim 10,
wherein said display unit includes a first display unit, which appears on the surface when said broadcast receiving terminal is in the first form, and a second display unit, which appears on the surface when said broadcast receiving terminal is in the second form,
said display control unit is operable to cause said first display unit to display the broadcast contents, and
said outline presentation unit is operable to cause said second display unit to display the outline.

12. A broadcast apparatus which transmits a broadcast wave, said broadcast apparatus comprising:
an outline information generating unit operable to generate an outline information indicating an outline of broadcast contents of the broadcast wave; and
a transmission unit operable to transmit the outline information on the broadcast wave so that the outline indicated by the outline information is synchronized with the broadcast contents.

13. The broadcast apparatus according to Claim 12,
wherein said transmission unit is operable to transmit, included in the outline information, time information indicating a time at which the outline should be presented.

14. The broadcast apparatus according to Claim 12,
wherein said transmission unit is operable to transmit, included in the broadcast wave, limit information which imposes limitation on a display of broadcast contents so that the display is forced to continue.

15. A broadcast receiving method of receiving a broadcast wave and displaying broadcast contents,
wherein the broadcast wave includes stream information which indicates broadcast contents, and outline information which indicates an outline of the broadcast contents, and
wherein said broadcasting receiving method comprises:
a receiving step of receiving the broadcast wave;
a judging step of judging whether or not the broadcast contents should be displayed, based on the user's operation;
a display control step of executing an image processing on the stream information of the broadcast wave received in said receiving step and causing the broadcast contents to be displayed in the display unit, when the broadcast contents are judged to be displayed in said judging step; and
an outline presentation step of presenting the outline indicated by the outline information received in said receiving step, so that the outline synchronizes with the broadcast contents, when it is judged, in said judging step, that the broadcast contents should not be displayed.

16. A program for receiving a broadcast wave and displaying broadcast contents,
wherein the broadcast wave includes a stream information indicating the broadcast contents, and an outline information indicating an outline of the broadcast contents, and
wherein said program causes a computer to execute:
a receiving step of receiving the broadcast wave;
a judging step of judging whether or not the broadcast contents should be displayed, based on the user's operation;
a display control step of executing an image processing on the stream information of the broadcast wave received in said receiving step and causing the broadcast contents to be displayed in the display unit, when the broadcast contents are judged to be displayed in said judging step; and
an outline presentation step of presenting the outline indicated by the outline information received in said receiving step, so that the outline synchronizes with the broadcast contents, when it is judged, in said judging step, that the broadcast contents should not be displayed.
